# EUROPÄISCHE PATENTANMELDUNG

(11) **EP 4 414 545 A1**
(43) Veröffentlichungstag der Anmeldung: **14.08.2024**
(21) Anmeldenummer: 23020069.3
(22) Anmeldetag: 08.02.2023
(51) Int. Cl.: F02C 3/34, F02C 6/00

(54) **VERFAHREN ZUM BETREIBEN EINER GASTURBINE MIT CO2-ABTRENNUNG**

(71) Anmelder: Linde GmbH, 82049 Pullach (DE)
(72) Erfinder: Bauer, Heinz, 82049 Pullach (DE); Kamann, Martin, 82049 Pullach (DE); Stoffregen, Torsten, 82049 Pullach (DE); Vincentelli, Martin, 82049 Pullach (DE)
(74) Vertreter: Fischer, Werner

(57) **Zusammenfassung**

Erfindungsgemäß werden ein Verfahren zum Betreiben einer Gasturbine (110) sowie eine Anlage (100) mit einer Gasturbine (110) vorgeschlagen, wobei ein Brennstoffstrom (1), der zumindest eine brennbare Komponente enthält, zusammen mit einem verdichteten Oxidatorstrom (6), der zumindest Sauerstoff enthält, unter Erhalt eines ersten Prozessgases (7) einer Verbrennung unterworfen wird und das erste Prozessgas (7) unter zumindest teilweiser Abkühlung zum Antrieb der Gasturbine (110) verwendet wird. Kennzeichnend hierbei ist, dass das erste Prozessgas (7) stromab der Gasturbine (110) zumindest teilweise einer Verdichtung (130) unterworfen wird und stromab der Verdichtung (130) zu einem ersten Teil (9) unter Erhalt eines an CO2 angereicherten zweiten Prozessgases (4) und eines an CO2 abgereicherten Anlagenabgases (5) einer CO2-Abtrennung (140, 150) unterworfen wird, wobei das erste Prozessgas (7) zu einem zweiten Teil abgekühlt und anschließend zumindest teilweise zur Bildung des verdichteten Oxidatorstroms (6) verwendet wird, und wobei dem ersten Prozessgas (7) und/oder dem zweiten Teil (8) des ersten Prozessgases ein sauerstoffhaltiger Gasstrom (2, 3) zugemischt wird.

## Beschreibung

Die Erfindung betrifft ein Verfahren zum Betreiben einer Gasturbine.

### Hintergrund

Typischerweise werden Gasturbinen mit fossilen Brennstoffen, beispielsweise Erdgas, und Umgebungsluft aus der Erdatmosphäre betrieben. Dabei wird ein Abgas erzeugt, das gewöhnlich ca. 2 bis 4 Molprozent Kohlenstoffdioxid (CO2) und 12 bis 15 Molprozent Sauerstoff sowie weitere Luftbestandteile, hauptsächlich Stickstoff, enthält. Üblicherweise wird das Abgas mit einem Druck von weniger als 150 kPa abgegeben in die Atmosphäre entlassen.

In der US 2010/0058801 A1 wird eine Gasturbine in einer Anlage zur Verflüssigung von Erdgas beschrieben. Die US 8,671,659 B2 gibt eine Möglichkeit an, mittels einer Gasturbine elektrischen Strom zu erzeugen.

Wegen des großen Einflusses von CO2 auf den Klimawandel, wird es immer wichtiger, CO2-Emissionen zu senken oder ganz zu vermeiden. In der EP 2 435 540 B1 und der WO 2013/000953 A2 wird in diesem Zusammenhang beschrieben, wie CO2 mittels Absorption, insbesondere Aminwäsche, aus einem Gasstrom entfernt werden kann.

### Offenbarung der Erfindung

Vor diesem Hintergrund werden Verfahren und Anlagen mit den Merkmalen der jeweiligen unabhängigen Ansprüche vorgeschlagen. Vorteilhafte Ausgestaltungen und weitere Aspekte der Erfindung sind Gegenstand der abhängigen Ansprüche sowie der nachfolgenden Beschreibung.

Die Erfindung bedient sich der Maßnahme, einen ersten Prozessstrom, der durch Verbrennung eines Oxidatorstroms mit einem Brennstoffstrom erzeugt wird, stromab einer Gasturbine, zu deren Antrieb er verwendet wird, einer Verdichtung und anschließenden CO2-Abtrennung zu unterwerfen und - zusammen mit zusätzlichem Sauerstoff - zu der Verbrennung zurückzuführen. Dadurch wird eine im Vergleich zu herkömmlichen Verfahren erhöhte CO2-Konzentration im Abgas erzielt und eine effizientere CO2-Abtrennung ermöglicht.

Im Einzelnen umfasst die Erfindung ein Verfahren zum Betreiben einer Gasturbine, wobei ein Brennstoffstrom, der zumindest eine brennbare Komponente enthält, zusammen mit einem verdichteten Oxidatorstrom, der zumindest Sauerstoff enthält, unter Erhalt eines ersten Prozessgases einer Verbrennung unterworfen werden. Das erste Prozessgas wird unter zumindest teilweiser Abkühlung zum Antrieb der Gasturbine verwendet und stromab der Gasturbine zumindest teilweise einer Verdichtung unterworfen. Stromab der Verdichtung wird das erste Prozessgas zu einem ersten Teil unter Erhalt eines an CO2 angereicherten zweiten Prozessgases und eines an CO2 abgereicherten Anlagenabgases einer CO2-Abtrennung unterworfen. Ein zweiter Teil des ersten Prozessgases wird zumindest teilweise abgekühlt und anschließend zur Bildung des verdichteten Oxidatorstroms verwendet. Dem ersten Prozessgas und/oder dem zweiten Teil des ersten Prozessgases wird ein sauerstoffhaltiger Gasstrom zugemischt.

In einigen Ausgestaltungen enthält der sauerstoffhaltige Gasstrom zwischen 10 bis maximal 50 Molprozent Sauerstoff und wird dem ersten Prozessgas stromauf der Verdichtung zugemischt. Beispielsweise kann Umgebungsluft als der sauerstoffhaltige Gasstrom verwendet werden. Dadurch wird nur ein Verdichter zur Verdichtung des für die Verbrennung erforderlichen Sauerstoffs benötigt.

Alternativ kann der sauerstoffhaltige Gasstrom mindestens 50 bis maximal 100 Molprozent Sauerstoff enthalten und dem zweiten Teil des ersten Prozessgases stromauf der Verbrennung zugemischt werden. Somit muss Frischsauerstoff nicht in der CO2-Abtrennung behandelt werden, so dass diese mit geringerer Volumenkapazität vorgesehen werden kann als in Fällen, in denen der sauerstoffhaltige Gasstrom stromauf der CO2-Abtrennung zugeführt wird. Außerdem verringert sich dadurch der Durchsatz von im Wesentlichen inerten Komponenten des sauerstoffhaltigen Gasstroms, beispielsweise von Stickstoff und/oder Edelgasen, die in der natürlichen Atmosphäre enthalten sind. Ein solcher sauerstoffreicher Strom kann beispielsweise aus einer Luftzerlegungsanlage stammen, insbesondere, wenn die Gasturbine zum Antrieb einer solchen Luftzerlegungsanlage verwendet wird, oder auch als Neben- bzw. Abfallprodukt einer Elektrolyse, z.B. Wasser- und/oder CO2-Elektrolyse anfallen.

Das Verfahren wird bevorzugt so betrieben, dass sich in dem ersten Prozessgas unmittelbar stromauf der CO2-Abtrennung eine auf das Volumen bezogene Konzentration an CO2 von mehr als 3%, mehr als 5% oder mehr als 7% einstellt. Dadurch kann die CO2-Abtrennung besonders effizient betrieben werden. Insbesondere kann dazu eine Rückführquote des ersten Prozessgases zu der Gasturbine (z.B. ein Mengenverhältnis des zweiten Teils des ersten Prozessgases zu dem ersten Teil des ersten Prozessgases) in Abhängigkeit von der CO2-Konzentration stromauf der CO2-Abttrennung eingestellt werden.

Die CO2-Abtrennung umfasst insbesondere eine Membrantrennung und/oder eine Wäsche mit einem Absorptionsmittel, insbesondere eine Aminwäsche, wie sie z.B. in DE 10 2008 025 224 A1 beschrieben ist, und/oder eine Adsorptionstrennung unter Verwendung eines Adsorbers. Dies sind besonders relevante Methoden der CO2-Entfernung aus einem Gasgemisch.

Das erste Prozessgas wird in einigen Ausgestaltungen der Erfindung stromauf der Verdichtung und/oder stromab der Verdichtung unter Abkühlung einem Wärmetausch unterworfen, insbesondere wobei in dem Wärmetausch abgegebene Wärme für eine Regeneration des Absorptionsmittels und/oder des Adsorbers verwendet wird, sofern diese für die CO2-Abtrennung verwendet werden. Dadurch kann das gesamte Verfahren besonders energieeffizient durchgeführt werden.

Durch die Gasturbine bereitgestellte mechanische Energie kann insbesondere zur Verdichtung des ersten Prozessgases und/oder zu einer weiteren Verdichtung des (gekühlten) zweiten Teils des ersten Prozessgases zur Erzeugung des verdichteten Oxidatorstroms und/oder zu einer Verdichtung eines CO2-reichen Stromes und/oder zur Erzeugung von elektrischem Strom verwendet werden. Dadurch ergeben sich besonders energieeffiziente Umsetzungsmöglichkeiten.

Vorzugsweise wird dabei eine Erzeugung von elektrischem Strom so gesteuert, dass Lastwechsel anderer Verbraucher durch von der Gasturbine bereitgestellter mechanischer Energie zumindest teilweise kompensiert werden. Dies erleichtert die Steuerung der mechanisch relativ trägen Gasturbine bzw. erhöht deren Effizienz.

Eine erfindungsgemäße Anlage mit einer Gasturbine und zumindest einem Verdichter und einer Vorrichtung zur Abreicherung eines Gasstroms an CO2, ist dazu eingerichtet, ein Verfahren wie soeben beschrieben durchzuführen und profitiert daher von dessen Vorteilen in entsprechender Weise.

Die Erfindung stellt somit Anlagen bzw. Verfahren bereit, bei denen eine Gasturbine, durch die Gasturbine angetriebene Komponenten sowie eine Abgasverdichtung und eine CO2-Abtrennung hochgradig integriert sind. Dabei kann sämtliche erforderliche mechanische Energie durch die Gasturbine bereitgestellt werden. Dadurch wird die Gesamteffizienz gesteigert, da die Umwandlung von in Brennstoff enthaltener chemischer Energie in thermische und mechanische Energie sowie deren Nutzung optimiert wird. Zugleich werden die Anzahl an erforderlichen Komponenten, der Platzbedarf sowie der Planungsaufwand reduziert. Die Erfindung stellt zudem eine Möglichkeit zur Nachrüstung bestehender Anlagen bereit, da die hier verwendeten Komponenten auch in herkömmlichen Anlagen in der Regel vorhanden sind und daher lediglich eine entsprechende Verschaltung (z.B. mittels Rohrleitungen, Ventile, Steuerung usw.) vorgenommen werden muss.

### Ausführungsformen der Erfindung

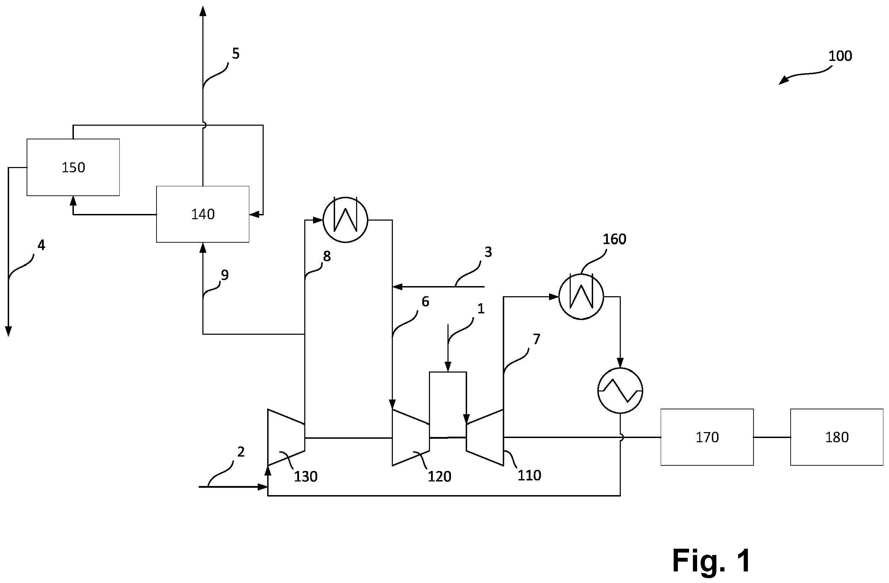

Die Erfindung soll mit weiteren Einzelheiten im Folgenden anhand des im der Figur 1 schematisch dargestellten Ausführungsbeispiels näher erläutert. Wird im Folgenden auf ein Bauteil einer Vorrichtung verwiesen, so bezieht sich dies in sinngemäß entsprechender Weise auch auf in diesem bzw. mittels dieses Bauteils durchgeführte Verfahrensschritte und/oder umgekehrt. Hierbei zeigt:
Figur 1 eine Ausgestaltung der Erfindung in schematischer Darstellung als Blockdiagramm.

In Figur 1 ist eine Ausgestaltung der Erfindung schematisch in Form eines Blockdiagramms gezeigt und insgesamt als Anlage 100 bezeichnet.

Ein zentrales Element der Anlage 100 ist eine Gasturbine 110, die Verdichter 120, 130 sowie optional weitere Verbraucher 170, 180 antreibt. Die Gasturbine 110 wird mit einem Brennstoffstrom 1, beispielsweise einem Methan, Ethan, Propan und/oder Butan enthaltendem Fluidstrom, sowie einem zumindest Sauerstoff enthaltenden Oxidatorstrom 6 versorgt. Der Brennstoffstrom 1 wird dabei zumindest teilweise verbrannt, wobei eine Volumenexpansion eintritt, die letztlich zum Antrieb der Turbine genutzt und damit in mechanische Energie umgesetzt wird. Dabei wird das Turbinenabgas (auch als erstes Prozessgas 7 bezeichnet) entspannt und teilweise abgekühlt.

In dem hier gezeigten Beispiel wird das erste Prozessgas 7 über eine Abwärme-Rückgewinnungseinheit 160 und einen nicht weiter bezeichneten (z.B. optionalen) Wärmetauscher zu dem Verdichter 130 geführt und verdichtet. Beispielsweise kann das entspannte erste Prozessgas 7 stromauf des Verdichters 130 auf einem ersten Druckniveau, das im Wesentlichen dem natürlichen Umgebungsluftdruck entspricht, z.B. im Bereich von 0,9 bis 3 bar, vorliegen und in dem Verdichter 130 auf ein zweites Druckniveau, beispielsweise in einem Bereich von 4.5 bis 50 bar, verdichtet werden. Beispielsweise kann ein Druckverhältnis (von stromab des Verdichters zu stromauf des Verdichters 130) 4,5 bis 44,5 betragen, wobei große Kraftwerksturbinen typischerweise mit einem Druckverhältnis zwischen 13 und 25 und Aeroderivative Turbinen bei einem Druckverhältnis von 23 bis 44,5 betrieben werden. Ein Beispiel für eine Aeroderivative Turbine ist das Modell LMS100 von GE, das mit Zwischenkühlung bis zu einem Druckverhältnis von 44,5 betrieben werden kann. In einigen Ausgestaltungen der Anlage 100 kann stromauf des Verdichters 130 ein sauerstoffhaltiger Gasstrom 2, beispielsweise Luft, synthetische Luft, gereinigte Luft oder ein anderes sauerstoffhaltiges Gasgemisch, auf dem ersten Druckniveau zu dem ersten Prozessgas 7 zugemischt werden.

Die Abwärme-Rückgewinnung 160 kann beispielsweise in einem oder mehreren Wärmetauschern, in denen das Turbinenabgas 7 gekühlt wird, Dampf erzeugen, der für weitere Anwendungen innerhalb und/oder außerhalb der Anlage 100 verwendet werden kann. Die Dampfqualität (der Dampfdruck) ergibt sich dabei im Wesentlichen aus dem Temperaturniveau des Turbinenabgases (typischerweise zwischen ca. 420 °C und ca. 540 °C bei Aeroderivativen Dampfturbinen, d.h. auf Turbinen aus der Luftfahrt basierenden Konstruktionen; bei Kraftwerks- bzw. Industrieturbinen typischerweise zwischen ca. 540 °C und ca. 650 °C). Insbesondere kann dabei Niederdruckdampf anfallen. Beispielsweise kann Niederdruckdampf auf einem Druckniveau im Bereich von 0,5 bis 5 bar vorliegen.

In der Abwärme-Rückgewinnung 160 kann in einigen Ausgestaltungen der Anlage 100 auch Mitteldruck- (5 bis 25 bar) und oder Hochdruckdampf >25) erzeugt und für Anwendungen innerhalb und/oder außerhalb der Anlage 100 bereitgestellt werden. Insbesondere kann solcher Dampf mit mittlerem oder hohem Druck zur Stromerzeugung oder zum mechanischen Antreiben von Aggregaten mittels Dampfturbinen verwendet werden.

In einigen Ausgestaltungen können auch Dampfströme auf unterschiedlichen Druckniveaus in der Abwärme-Rückgewinnung 160 erzeugt werden, so dass unterschiedliche Verbraucher gemäß den jeweiligen Anforderungen versorgt werden können.

Stromab der Verdichtung 130 wird ein erster Teil 9 des ersten Prozessgases 7 (ggf. zusammen mit dem sauerstoffhaltigen Gasstrom 2) einer CO2-Abtrennung 140, 150 zugeführt. In dem hier gezeigten Beispiel wird dieser erste Teil 9 des ersten Prozessgases 7 dazu in einem CO2-Scrubber 140 (der z.B. einen Absorber, insbesondere in Form einer Aminwäsche, umfasst) an CO2 abgereichert. Das dazu verwendete Absorptionsmittel wird in einer Regeneration 150 (auch als CO2-stripping bezeichnet) regeneriert (z.B. durch Zuführen von Wärme) wobei ein an CO2 angereichertes zweites Prozessgas 4 gewonnen wird. Insbesondere kann zur Regenerierung 150 des Absorptionsmittels Wärme aus der Abwärme-Rückgewinnungseinheit 160 verwendet werden. Dazu kann beispielsweise in der Abwärme-Rückgewinnung erzeugter Niederdruckdampf zum Erhitzen (auch als reboiling bezeichnet) des Absorptionsmittels, beispielsweise einer Aminlösung, und damit zum Austreiben des darin absorbierten CO2 verwendet werden. Zumindest ein Teil des in dem CO2-Scrubber 140 behandelten ersten Teils 9 des ersten Prozessgases 7 wird als Anlagenabgas 5 abgegeben. Das Anlagenabgas weist insbesondere weniger als 1%, weniger als 0,3%, weniger als 0,1% oder weniger als 0,03% an CO2 auf.

Der CO2-Scrubber 140 kann insbesondere einen Mitteldruck-Scrubber, der zur Absorption von CO2 aus Gasströmen bei einem mittleren Druckniveau, das in einem Bereich von 5 bis 60 bar liegt, eingerichtet ist, und einen Niederdruck-Scrubber, der zur Absorption von CO2 aus Gasströmen bei einem niedrigen Druckniveau, das in einem Bereich von 1 bis 5 bar liegt, eingerichtet ist, umfassen. Die Regeneration 150 kann in solchen Fällen zum Austreiben des absorbierten CO2 aus sowohl dem Absorptionsmittel des Mitteldruck-Scrubbers, als auch dem des Niederdruck-Scrubbers eingerichtet sein, wobei gegebenenfalls getrennte Medienführungen (z.B. separate Stripping-Behälter) für die unterschiedlichen Absorptionsmittel vorgesehen sein können. Es ist jedoch auch eine gemeinsame Medienführung möglich, insbesondere wenn in dem Niederdruck-Scrubber das gleiche Absorptionsmittel eingesetzt wird, wie in dem Mitteldruck-Scrubber

Wie eingangs erwähnt, können alternativ oder zusätzlich zu dem hier gezeigten Scrubber-basierten System auch andere Methoden der CO2-Separation zur Anwendung kommen. Beispiele für derartige andere Methoden sind Membrantrennverfahren, Adsorptionstrennung und Destillationsverfahren bzw. Kombinationen daraus.

Ein zweiter Teil 8 des ersten Prozessgases 7 wird, ohne den CO2-Scrubber 140 zu passieren, gekühlt und anschließend zur Bildung des Oxidatorstroms 6 verwendet. Dabei kann in einigen Ausgestaltungen zusätzlich ein (ggf. weiterer) sauerstoffhaltiger Gasstrom 3 zugemischt werden. Der sauerstoffhaltige Gasstrom 3 ist insbesondere ein Gasstrom, der eine höhere Sauerstoffkonzentration als der sauerstoffhaltige Gasstrom 2 aufweist. Besonders bevorzugt wird als der sauerstoffhaltige Gasstrom 3 ein zu mehr als 50 Molprozent aus Sauerstoff bestehender Gasstrom verwendet. Dies ist insbesondere dann vorteilhaft, wenn ein solcher Gasstrom in der Anlage 100 bzw. deren räumlicher Umgebung ohnehin vorhanden ist, beispielsweise wenn die Gasturbine 110 zum Antrieb einer Luftzerlegungsanlage (z.B. Verbraucher 170) verwendet wird.

In einigen Ausgestaltungen kann ein Teil des in dem CO2-Scrubber 140 bearbeiteten Gases 9 in den Oxidatorstrom 6 überführt werden, beispielsweise um eine höhere Regelgüte in Bezug auf eine Zusammensetzung des Oxidatorstroms 6 zu erreichen und/oder um eine höhere Ausnutzung des in dem ersten Prozessgas 2 enthaltenen Restsauerstoffs zu erreichen. Dies ist besonders in Fällen mit einer Einspeisung eines an Sauerstoff sehr reichen Gasstroms 3 vorteilhaft.

Bevorzugt wird die Aufteilung des ersten Prozessgases 7 in dessen ersten 9 und zweiten 8 Teil so durchgeführt, dass sich in dem ersten Prozessgas eine CO2-Konzentration von über 5 Molprozent, beispielsweise ca. 7 Molprozent, einstellt. Herkömmlicherweise (insbesondere ohne Abgasrückführung) ergibt sich demgegenüber eine CO2-Konzentration von etwa 3 Molprozent. Durch die erheblich gesteigerte Konzentration und den mittels des Verdichters erhöhten Druck wird die Abtrennung von relevanten Mengen an CO2 deutlich erleichtert, so dass dazu verwendete Anlagenkomponenten (CO2-Scrubber 140, Regeneration 150) bei gleicher Trennleistung (Restkonzentration CO2 im Anlagenabgas 5) erheblich kleiner und kostengünstiger ausgeführt werden können, als dies herkömmlicherweise der Fall wäre. Über das zweite Prozessgas 4 und das Anlagenabgas 5 ausgeschleuste Gasvolumina werden durch die Einspeisung des bzw. der sauerstoffhaltigen Gasströme 2, 3 kompensiert.

Die Gasturbine 110 versorgt, wie bereits erwähnt, Verbraucher 170, 180 mit mechanischer Antriebsenergie. In einigen Ausgestaltungen der Anlage 100 kann zumindest einer dieser Verbraucher 170, 180 einen Verdichter, beispielsweise einen Zentrifugalkompressor, zur Verdichtung des an CO2 angereicherten zweiten Prozessgases 4 umfassen. Das zweite Prozessgas 4 kann insbesondere mehr als 30%, mehr als 50%, mehr als 70%, mehr als 90%, mehr als 95%, mehr als 99% oder mehr als 99,9% CO2 enthalten. Je nach intendierter Verwendung des zweiten Prozessgases 4 kann dieses auf ein jeweils angemessenes Druckniveau verdichtet werden. Beispielsweise kann das zweite Prozessgas 4 als CO2-Produktgas abgegeben werden, so dass eine Verdichtung auf ein Speicher- bzw. Transportdruckniveau (z.B. 20 bis 300 bar) vorgesehen sein kann. Es kann jedoch auch vorgesehen sein, dass das zweite Prozessgas 4 direkt zur CO2-Verpressung (auch als Sequestration bezeichnet) zur im Wesentlichen dauerhaften Entsorgung in unterirdischen Lagerstätten verwendet wird. In solchen Fällen kann eine Verdichtung direkt auf ein Injektionsdruckniveau (z.B. 80 bis 300 bar) vorgesehen sein. In einigen Ausgestaltungen kann der zweite Prozessgasstrom 4 nach dessen Verdichtung auch als Kühl- bzw. Kältemittel in einem offenen Kühlkreislauf verwendet werden und erst nach der Verwendung als Kühlmittel abgegeben werden.

Alternativ oder zusätzlich kann zumindest einer der Verbraucher 170, 180 einen oder mehrere Kältemittelkompressoren umfassen, der bzw. die ein Kältemittel, das in der Anlage 100 oder in deren räumlicher Nähe Verwendung finden kann, verdichten. Insbesondere geeignet sind hierbei Zentrifugalkompressoren.

In Fällen, in denen ein Generator zur Stromerzeugung von der Gasturbine 110 angetrieben wird (in einigen Ausgestaltungen kann dies auch ein Startermotor mit Rückwärts-Lauf-Fähigkeit sein), kann der Generator zum Ausgleichen von Lastwechseln anderer Verbraucher, insbesondere der Verbraucher 170, 180, genutzt werden. So kann die Gesamteffizienz gesteigert werden, da die träge Gasturbine 110 weniger starken Lastwechseln ausgesetzt wird und stattdessen eine relative stabile Ausgangslast flexibel auf leichter steuerbare Verbraucher aufgeteilt 170, 180 wird.

## Patentansprüche

1. Verfahren zum Betreiben einer Gasturbine (110), wobei ein Brennstoffstrom (1), der zumindest eine brennbare Komponente enthält, zusammen mit einem verdichteten Oxidatorstrom (6), der zumindest Sauerstoff enthält, unter Erhalt eines ersten Prozessgases (7) einer Verbrennung unterworfen wird und das erste Prozessgas (7) unter zumindest teilweiser Abkühlung zum Antrieb der Gasturbine (110) verwendet wird, **dadurch gekennzeichnet, dass** das erste Prozessgas (7) stromab der Gasturbine (110) zumindest teilweise einer Verdichtung (130) unterworfen wird und stromab der Verdichtung (130) zu einem ersten Teil (9) unter Erhalt eines an CO2 angereicherten zweiten Prozessgases (4) und eines an CO2 abgereicherten Anlagenabgases (5) einer CO2-Abtrennung (140, 150) unterworfen wird, wobei das erste Prozessgas (7) zu einem zweiten Teil (8) abgekühlt und anschließend zumindest teilweise zur Bildung des verdichteten Oxidatorstroms (6) verwendet wird, und wobei dem ersten Prozessgas (7) und/oder dem zweiten Teil (8) des ersten Prozessgases (7) ein sauerstoffhaltiger Gasstrom (2, 3) zugemischt wird.

2. Verfahren nach Anspruch 1, wobei der sauerstoffhaltige Gasstrom (2) zwischen 10 bis maximal 50 Molprozent Sauerstoff enthält und dem ersten Prozessgas (7) stromauf der Verdichtung zugemischt wird.

3. Verfahren nach Anspruch 1, wobei der sauerstoffhaltige Gasstrom (3) mindestens 50 bis maximal 100 Molprozent Sauerstoff enthält und dem zweiten Teil des ersten Prozessgases (8) stromauf der Verbrennung zugemischt wird.

4. Verfahren nach einem der vorstehenden Ansprüche, wobei die CO2-Abtrennung (140, 150) eine Adsorptionstrennung unter Verwendung eines Adsorbers und/oder eine Wäsche mit einem Absorptionsmittel, insbesondere eine Aminwäsche, und/oder eine Membrantrennung umfasst.

5. Verfahren nach einem der vorstehenden Ansprüche, wobei das erste Prozessgas (7) stromauf der Verdichtung (130) und/oder stromab der Verdichtung (130) unter Abkühlung einem Wärmetausch (160) unterworfen wird, insbesondere wobei in dem Wärmetausch (160) abgegebene Wärme für eine Regeneration des Absorptionsmittels und/oder Adsorbers nach Anspruch 4 verwendet wird.

6. Verfahren nach einem der vorstehenden Ansprüche, wobei in dem ersten Prozessgas (7) stromauf der CO2-Abtrennung (140, 150) eine auf das Volumen bezogene Konzentration an CO2 von mehr als 3%, mehr als 5% oder mehr als 7% eingestellt wird.

7. Verfahren nach einem der vorstehenden Ansprüche, wobei durch die Gasturbine (110) bereitgestellte mechanische Energie zur Verdichtung (130) des ersten Prozessgases (7) und/oder zu einer weiteren Verdichtung (120) des zweiten Teils des ersten Prozessgases (8) zur Erzeugung des verdichteten Oxidatorstroms (6) und/oder zu einer Verdichtung (170) eines CO2-reichen Stromes, insbesondere des zweiten Prozessgases (4) oder eines Teils davon, und/oder zur Erzeugung von elektrischem Strom (180) verwendet wird.

8. Verfahren nach Anspruch 7, wobei eine Erzeugung von elektrischem Strom (180) so gesteuert wird, dass Lastwechsel in anderen Verbrauchern (170) von durch die Gasturbine (110) bereitgestellter mechanischer Energie zumindest teilweise kompensiert werden.

9. Anlage (100) mit einer Gasturbine (110) und zumindest einem Verdichter (120, 130) und einer Vorrichtung (140, 150) zur Abreicherung eines Gasstroms an CO2, wobei die Anlage (100) dazu eingerichtet ist, ein Verfahren nach einem der vorstehenden Ansprüche durchzuführen.
